Europäisches Patentamt

European Patent Office

Office européen des brevets

(11) Numéro de publication: **0 341 162**
**A1**

## (12) DEMANDE DE BREVET EUROPEEN

(21) Numéro de dépôt: 89420151.6

(22) Date de dépôt: 26.04.89

(51) Int. Cl.⁴: **A 47 J 36/06**
A 47 J 45/06

(30) Priorité: 03.05.88 FR 8806319

(43) Date de publication de la demande:
08.11.89 Bulletin 89/45

(84) Etats contractants désignés: **DE GB IT**

(71) Demandeur: **TERRAILLON (société anonyme)**
**Route de Thonon Juvigny**
**F-74100 Annemasse (FR)**

(72) Inventeur: **Gagnepain, Didier**
**Plottes**
**F-71700 Tournus (FR)**

(74) Mandataire: **de Beaumont, Michel**
**Cabinet Poncet 7, chemin de Tillier B.P. 317**
**F-74008 Annecy Cédex (FR)**

(54) Bouton pour couvercle de récipient culinaire.

(57) Le bouton selon l'invention comprend un levier basculeur (19) monté pivotant sur le corps de bouton (1) selon un axe de rotation horizontal (20) situé en une position intermédiaire du levier basculeur. La surface supérieure (21) du levier est accessible pour sa manoeuvre d'un côté ou de l'autre de l'axe. Le basculeur (19) peut pivoter autour de son axe entre une position d'obturation dans laquelle sa facette inférieure (23) vient obturer un conduit d'échappement de vapeur (12), et une position d'ouverture dans laquelle la vapeur s'échappe du conduit (12) et est guidée par des flasques latéraux (25) et une paroi de liaison (26).

Fig.1

EP 0 341 162 A1

**Description**

## BOUTON POUR COUVERCLE DE RECIPIENT CULINAIRE

La présente invention concerne les boutons pour couvercles de récipient culinaire, dans lesquels sont prévus des moyens permettant le réglage d'échappement de vapeur hors du récipient.

Lors de la cuisson d'aliments dans un récipient culinaire, de la vapeur d'eau se dégage. On adapte souvent un couvercle sur le récipient culinaire, afin de limiter l'échappement de vapeur hors du récipient. Toutefois, dans certaines phases de cuisson, on souhaite laisser s'échapper une partie de la vapeur, et il faut pour cela prévoir une ouverture de couvercle obturable de manière contrôlée par un organe d'obturation. De préférence, on prévoit le plus souvent l'ouverture et l'organe d'obturation dans un élément central de couvercle faisant simultanément office de poignée de préhension.

Un tel couvercle muni d'un bouton à obturation réglable est décrit par exemple dans le brevet US-A-4 285 441. Un tel bouton comprend un corps de bouton formant organe de préhension de couvercle et est adaptable au couvercle par des moyens de fixation. Le corps de bouton comprend une ouverture pour le passage de vapeur, l'ouverture étant positionnée en regard d'un trou de couvercle. Un clapet en forme de disque, monté rotatif selon l'axe vertical central du corps de bouton, permet d'obturer ou d'ouvrir le passage formé par le trou de couvercle et l'ouverture du corps de bouton. Un ergot, dépassant du corps de bouton, permet l'actionnement du clapet selon un mouvement rotatif autour de l'axe central du bouton de préhension.

Ces boutons de couvercle connus présentent l'inconvénient de nécessiter, pour l'ouverture ou la fermeture de l'organe d'obturation d'échappement de vapeur, un actionnement en rotation autour de l'axe vertical du couvercle. Ce mouvement d'actionnement produit un effort transversal sur le couvercle par rapport au récipient, et un effort en rotation du couvercle autour de son axe central. Cet effort risque de faire échapper le couvercle hors du récipient, de sorte qu'il est nécessaire de manipuler les boutons de couvercle connus avec deux mains ou deux doigts.

La présente invention a pour but d'éviter les inconvénients des boutons de couvercle connus, en prévoyant une nouvelle structure de bouton de couvercle dans laquelle l'organe d'obturation peut être manipulé avec un seul doigt sans avoir à toucher avec un autre doigt ou une autre main la partie en saillie du bouton ou le couvercle ; la manipulation de l'organe d'obturation se fait par simple pression verticale de haut en bas, la pression verticale tendant à plaquer le couvercle contre le récipient sans produire d'effort transversal risquant de faire échapper le couvercle hors du récipient. L'organe d'obturation selon l'invention peut en outre être aisément manipulable par n'importe quel objet tel qu'une cuillère, que l'utilisateur peut appuyer sur l'organe d'obturation.

Dans la description qui suit, et dans les revendications, pour une raison de clarté, on suppose que le couvercle est disposé selon un plan horizontal, de sorte que les directions parallèles au couvercle seront appelées des directions horizontales, et les directions perpendiculaires au couvercle seront appelées des directions verticales. On ne doit donc pas entendre les mots "horizontales" ou "verticales" dans leur sens strict puisque l'orientation du couvercle peut bien entendu être modifiée à volonté lors de son utilisation.

Selon un autre but de l'invention, la structure de bouton est particulièrement simple, et comprend un nombre de pièces très réduit, ces pièces pouvant être réalisées par moulage.

Un autre but de l'invention est de prévoir une structure de bouton obtenue par assemblage d'un nombre réduit de pièces pouvant être montées très facilement par des moyens automatiques, par simple encliquetage.

Selon un autre objet de l'invention, une structure simple de bouton de couvercle doit alors assurer une étanchéité adéquate lors de l'interruption d'échappement de vapeur, une protection contre les échauffements de l'organe de commande lorsque celui-ci est en position d'obturation, et une protection de l'utilisateur contre les jets de vapeur lorsque l'organe d'obturation est en position d'ouverture.

Pour atteindre ces objets ainsi que d'autres, le bouton de couvercle selon l'invention est muni d'un organe de commande en forme de levier basculeur monté pivotant sur le corps de bouton selon un axe de rotation horizontal situé en une position intermédiaire du levier basculeur ; la surface supérieure du levier est accessible pour sa manoeuvre par pression d'un côté ou de l'autre de l'axe ; le basculeur peut pivoter autour de son axe entre au moins une position d'obturation interdisant l'échappement de vapeur et une position d'ouverture autori sant l'échappement de vapeur.

Selon un mode de réalisation, le corps de bouton comprend un conduit de sortie de vapeur, dont une première extrémité est destinée à s'adapter sur l'ouverture de couvercle et dont une seconde extrémité forme orifice d'échappement de vapeur ; l'organe de commande comprend lui-même une partie d'obturation destinée à venir porter contre la seconde extrémité du conduit de sortie de vapeur pour l'obturer lorsque l'organe de commande est en position d'obturation, et à s'écarter de la seconde extrémité du conduit pour laisser s'échapper la vapeur lorsque l'organe de commande est en position d'ouverture.

Selon une variante, la partie d'obturation est une facette inférieure ménagée en extrémité de la face inférieure de l'organe de commande, la facette étant bordée de deux flasques latéraux perpendiculaires à l'axe de rotation et d'une paroi de liaison reliant les flasques latéraux ; les flasques latéraux et la paroi de liaison restent à l'extérieur du conduit de vapeur ; les flasques latéraux et la paroi de liaison définissent un canal d'échappement de vapeur prolongeant le conduit et orientant le jet de vapeur à l'écart de la surface supérieure du levier. On évite ainsi les jets de vapeur brûlante lorsque l'on met l'organe d'obturation en position d'ouverture.

D'autres objets, caractéristiques et avantages de la présente invention ressortiront de la description suivante de modes de réalisation particuliers, faite en relation avec les figures jointes, parmi lesquelles :

- la figure 1 représente un bouton de couvercle selon la présente invention en coupe longitudinale B-B vue de côté ;

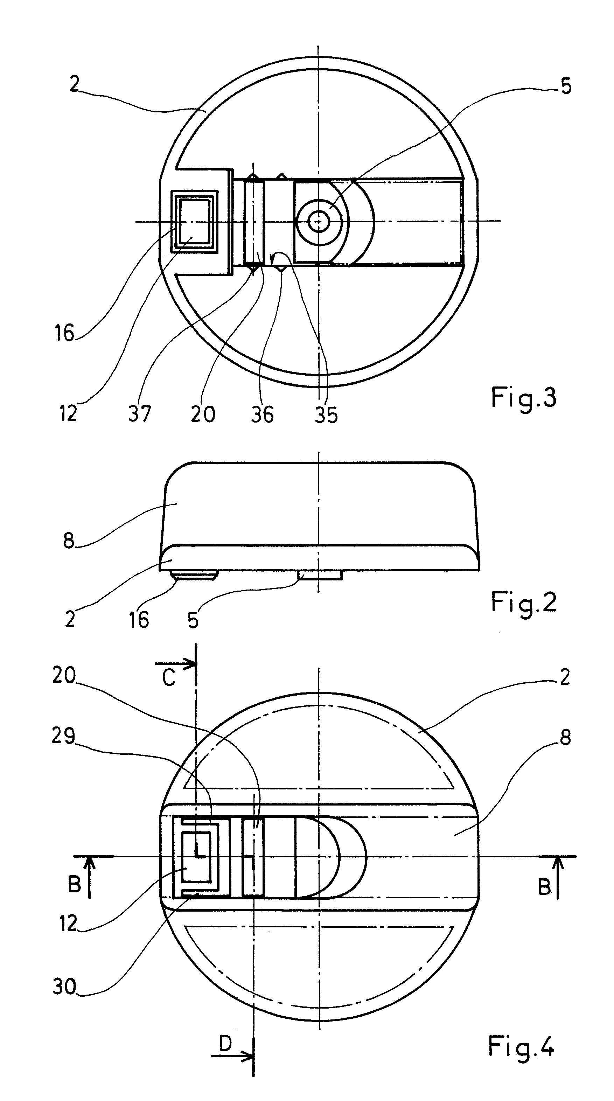

- la figure 2 représente le bouton de la figure 1 en vue de côté ;
- la figure 3 représente le bouton de la figure 1 en vue de dessous ;
- la figure 4 représente le bouton de la figure 1 en vue de dessus ;

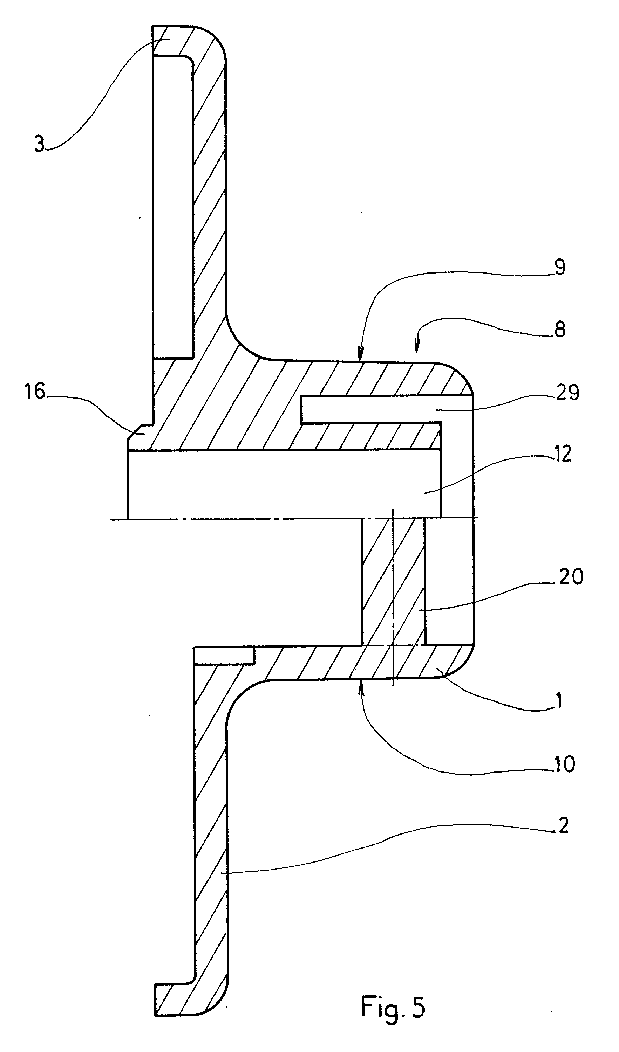

- la figure 5 représente le bouton de la figure 4 selon la coupe CD ;

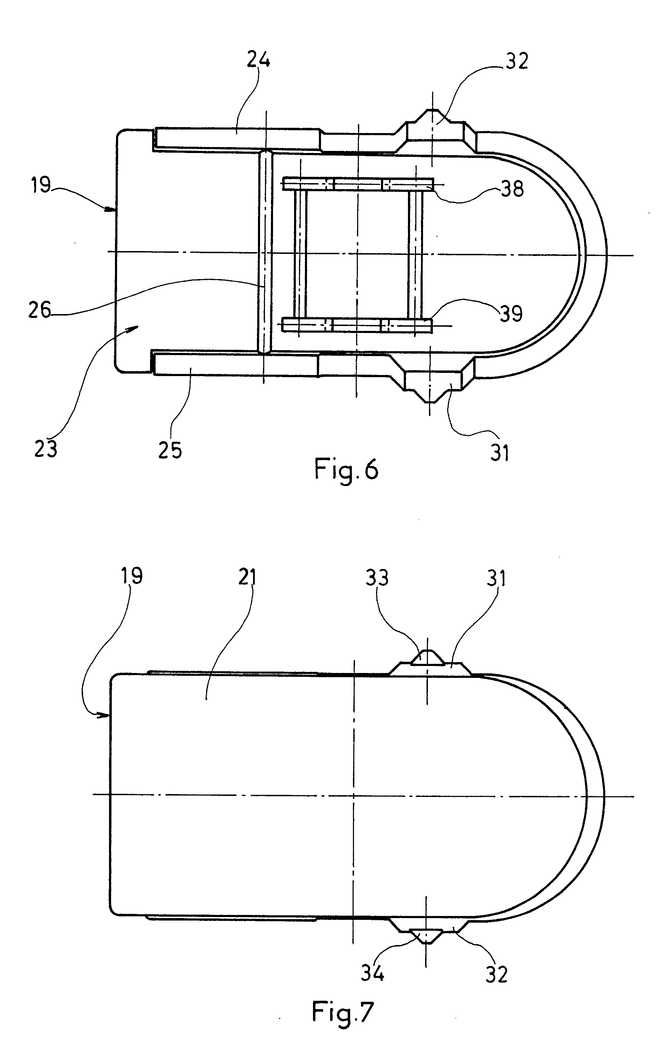

- la figure 6 représente en vue de dessous un organe d'obturation selon la présente invention ;
- la figure 7 représente l'organe d'obturation en vue de dessus ; et

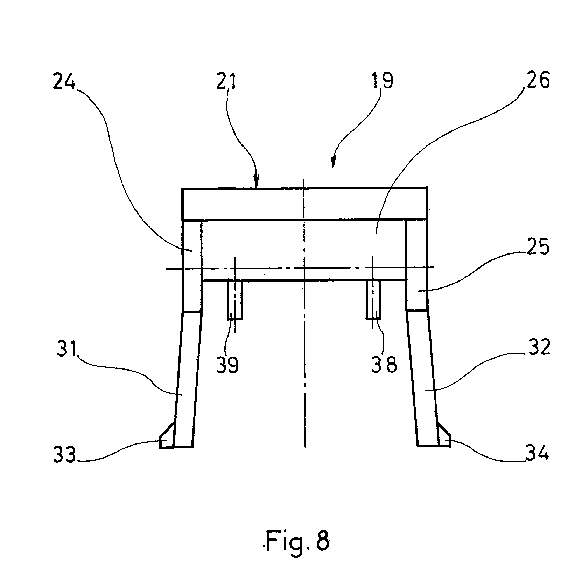

- la figure 8 représente l'obturation en vue de côté gauche.

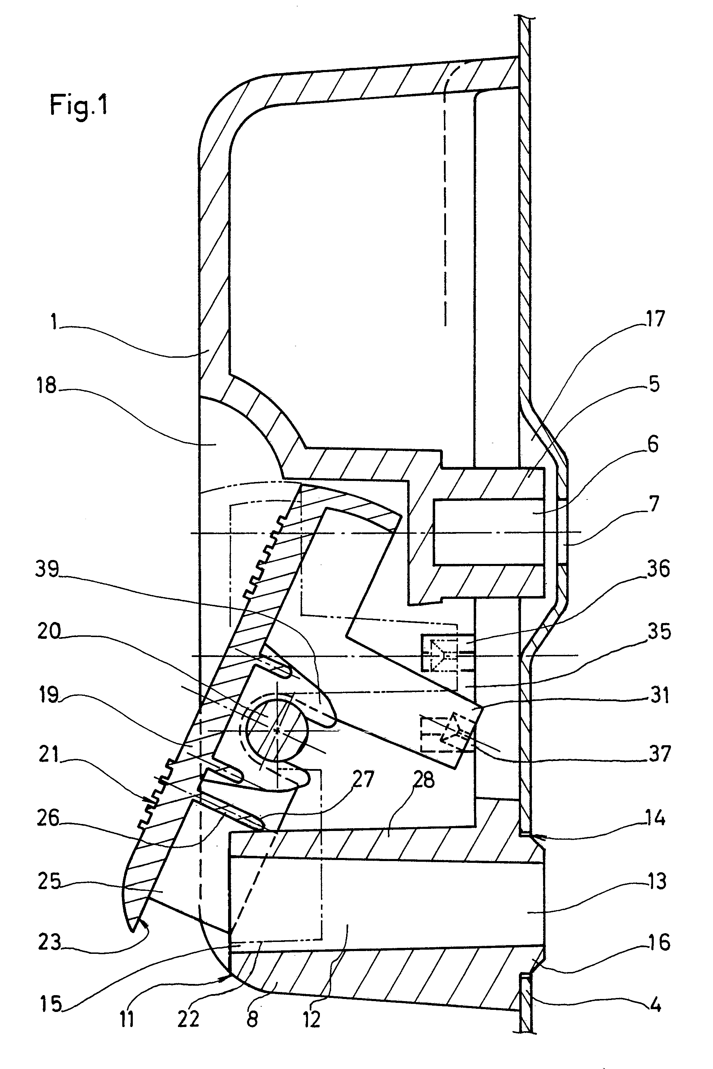

Dans le mode de réalisation représenté sur les figures, le bouton de couvercle selon la présente invention comprend un corps de bouton 1 comportant un socle 2 à pourtour sensiblement circulaire dont la périphérie est recourbée vers le bas pour former un rebord 3 destiné à se plaquer sur la face supérieure d'un couvercle 4. Le corps de bouton 1 comprend un canon central 5, d'axe vertical, dont l'extrémité inférieure dépasse légèrement sous la face inférieure du socle 2. Le canon 5 est muni d'un trou borgne central 6 pour recevoir une vis de fixation, non représentée sur les figures, passant dans un trou central 7 du couvercle 4. Le corps 1 comprend une partie de préhension 8, dépassant au-dessus du socle 2, par exemple en forme de barreau diamétral comme le représentent les figures 1. La partie de préhension 8 peut ainsi être tenue par l'utilisateur selon ses faces latérales 9 et 10.

A une première extrémité 11 de la partie de préhension 8 est prévu un conduit de sortie de vapeur 12 d'axe vertical, dont une première extrémité 13 est destinée à s'adapter sur une ouverture 14 de couvercle 4, et dont une seconde extrémité 15 forme orifice d'échappement de vapeur. La première extrémité 13 du conduit d'échappement de vapeur 12 forme une protubérance 16 au-dessous du socle 2, la protubérance 16 s'engageant dans l'ouverture de couvercle 14. Le couvercle 4 est conformé avec une cuvette centrale 17 dont la profondeur est supérieure à la protubérance formée par le canon central 5 au-dessus du socle 2. De cette manière, la vis de fixation traversant le trou 7 de couvercle et se vissant dans le trou borgne 6 de canon central 5 produit une pression de serrage entre le canon central 5 et le couvercle 4, de sorte que le socle 2 se trouve correctement plaqué sur la face supérieure du couvercle 4, selon tout le pourtour de socle, et en particulier sur les bords de l'ouverture 14 de couvercle autour de la protubérance 16 de conduit de vapeur. Une bonne étanchéité est ainsi assurée entre le couvercle et le conduit d'échappement de vapeur 12.

La seconde extrémité 15 du conduit d'échappement de vapeur 12 forme un siège plan situé dans un plan horizontal.

Le corps 1 comprend une cavité supérieure 18, ménagée dans la partie de préhension 8, et permettant le logement d'un organe d'obturation du conduit de vapeur 12 et son organe de commande. Dans ce mode de réalisation, l'organe de commande est un levier basculeur 19, monté pivotant sur le corps de bouton 1 selon un axe de rotation 20 horizontal situé en une position intermédiaire du levier basculeur. La surface supérieure 21 du levier basculeur 19 est accessible par l'utilisateur, et forme une partie de la face supérieure de la partie de préhension 8 du bouton. Le levier basculeur 19 peut pivoter autour de son axe 20 entre une position d'obturation, représentée par le trait mixte 22 sur la figure 1, et une position d'ouverture représentée en trait plein. Le levier basculeur comprend, à sa première extrémité, une facette inférieure 23 conformée pour pouvoir se plaquer contre le siège formé par la seconde extrémité 15 du conduit d'échappement de vapeur 12 lorsque le levier basculeur 19 est en position d'obturation. Ainsi, en position d'obturation représentée par le trait mixte 22, la facette 23 est plaquée contre la seconde extrémité 15, et empêche l'échappement de vapeur. Par contre, en position d'ouverture, la facette 23 s'écarte de l'extrémité 15, et laisse s'échapper la vapeur. Selon ce mode de réalisation, le levier 19 fait cumulativement fonction d'organe de commande et d'organe d'obturation.

La facette d'obturation 23 est bordée de deux flasques latéraux 24 et 25 perpendiculaires à l'axe de rotation 20, et est bordée d'une paroi de liaison 26. La paroi de liaison 26 est perpendiculaire aux deux flasques latéraux, et les relie selon le bord de facette 23 opposé à l'extrémité du levier basculeur 19, ou bord de facette 23 le plus proche de l'axe de rotation 20. Sur la figure 1, on voit que les flasques latéraux 24 et 25 et la paroi de liaison 26 définissent un canal d'échappement de vapeur, prolongeant le conduit d'échappement de vapeur 12, et orientant le jet de vapeur à l'écart de la surface supérieure 21 du levier basculeur 19.

Le conduit d'échappement de vapeur 12 est délimité par des parois formant une cheminée verticale. De préférence, le bord inférieur 27 de la paroi de liaison 26 reste en appui contre la paroi correspondante 28 du conduit d'échappement de vapeur 12. En particulier, il faut prévoir un tel contact entre le bord inférieur 27 de la paroi de liaison 26 et la paroi 28 du conduit lorsque le levier basculeur 19 est en position d'ouverture comme le représente la figure 1. Ce contact permet d'éviter l'échappement de vapeur en direction de l'axe 20, un tel échappement de vapeur risquant ensuite de produire un écoulement de vapeur de part et d'autre du levier basculeur 19, atteignant ainsi la zone supérieure 21 d'actionnement du levier basculeur.

Les flasques latéraux 24 et 25 coulissent dans deux fentes latérales 29 et 30 ménagées entre la paroi latérale de la partie de préhension 8 et la paroi correspondante du conduit d'échappement de vapeur 12. Ainsi, les flasques latéraux restent à proximité des faces extérieures correspondantes du conduit 12, et les fentes forment une chicane s'opposant au passage de la vapeur hors du canal d'échappement normal de vapeur.

De préférence, la paroi de liaison 26 est réalisée en une matière et selon une épaisseur telles qu'elle présente une possibilité de déformation élastique, permettant à son bord inférieur 27 de rester en appui élastique contre la paroi correspondante 28 du conduit 12, d'une part lorsque le levier basculeur 19 est en position d'ouverture, et également pendant au moins une partie de sa rotation autour de l'axe 20.

Selon un mode de réalisation représenté sur les figures, lorsque le levier basculeur 19 est en position d'ouverture, le bord inférieur 27 de la paroi de liaison 26 est en appui sur la paroi correspondante 28 du conduit d'échappement de vapeur 12 en un point situé au-dessus du plan horizontal passant par l'axe de rotation 20. De cette manière, l'effort d'appui élastique du bord inférieur 27 contre la paroi 28 tend à maintenir le levier basculeur 19 en position d'ouverture, et la paroi de liaison 26 participe au maintien du levier basculeur.

Le bouton selon la présente invention comporte en outre des moyens pour assurer le maintien du levier basculeur 19 soit en position d'ouverture soit en position de fermeture. Pour cela, le levier basculeur 19 comprend au moins une languette latérale, par exemple deux languettes latérales de positionnement 31 et 32, perpendiculaires à l'axe de rotation 20 et se développant vers le bas. Les languettes latérales 31 et 32 sont relativement élastiques, et comportent à leurs extrémités des nervures de positionnement 33 et 34. Les nervures de positionnement 33 et 34 sont maintenues en appui élastique glissant sur des faces intérieures crantées du corps de bouton 1. Les faces intérieures crantées telles que la face 35 comportent au moins un cran 36 de positionnement en position d'obturation et un cran 37 de positionnement en position d'ouverture. Ainsi, lorsque le levier basculeur 19 est en position d'obturation, la nervure 33 vient se loger dans le cran 36. Lorsque le levier basculeur 19 est en position d'ouverture, la nervure 33 vient se loger dans le cran 37.

Dans le mode de réalisation représenté, l'adaptation du levier basculeur 19 sur son axe de rotation 20 s'effectue par deux fourches 38 et 39 formant paliers, solidaires du levier basculeur 19, venant s'encliqueter sur un axe 20 formé d'un arbre transversal solidaire du corps de bouton 1.

Le fonctionnement du dispositif est particulièrement simple : en appuyant verticalement sur le levier basculeur 19 à droite de l'axe 20, sur la figure 1, l'utilisateur provoque le basculement du levier 19 dans sa position d'ouverture. En appuyant sur la partie gauche du levier basculeur 19, l'utilisateur ramène le levier 19 dans sa position de fermeture dans laquelle la facette 23 vient obturer le conduit d'échappement de vapeur 12.

En prévoyant une pluralité de crans de positionnement entre le cran 36 et le cran 37, on donne une possibilité de maintenir le levier basculeur 19 en toute position intermédiaire entre la position d'ouverture et la position de fermeture. Cela permet de régler à volonté l'échappement de la vapeur hors du conduit d'échappement 12.

La présente invention n'est pas limitée aux modes de réalisation qui ont été explicitement décrits, mais elle en inclut les diverses variantes et généralisations contenues dans le domaine des revendications ci-après.

## Revendications

1 - Bouton pour couvercle de récipient à dégagement de vapeur réglable comportant une ouverture (14) obturable par un obturateur (19) mobile monté en regard de l'ouverture pour se déplacer par rapport à celle-ci et par rapport à un corps de bouton (1), le corps de bouton (1) formant organe de préhension (8) du couvercle et étant adaptable au couvercle par des moyens de fixation, l'obturateur comportant un organe de commande accessible par l'utilisateur, caractérisé en ce que :
- l'organe de commande est un levier basculeur (19) monté pivotant dans le corps de bouton (1) selon un axe de rotation horizontal (20) situé en une position intermédiaire du levier basculeur,
- la surface supérieure (21) du levier basculeur est accessible pour sa manoeuvre par pression d'un côté ou de l'autre de l'axe,
- le levier basculeur (19) peut pivoter autour de son axe (20) entre au moins une position d'obturation interdisant l'échappement de vapeur et une position d'ouverture autorisant l'échappement de vapeur.

2 - Bouton selon la revendication 1, caractérisé en ce que:
- le corps de bouton comprend un conduit de sortie de vapeur (12) dont une première extrémité (13) est destinée à s'adapter sur l'ouverture (14) du couvercle et dont une seconde extrémité (15) forme orifice d'échappement de vapeur,
- le levier basculeur (19) comprend une partie d'obturation (23) destinée à venir porter contre la seconde extrémité (15) du conduit de sortie de vapeur (12) pour l'obturer lorsque le levier basculeur est en position d'obturation, et destinée à s'écarter de la seconde extrémité (15) du conduit de sortie de vapeur pour permettre la sortie de vapeur lorsque le levier basculeur est en position d'ouverture.

3 - Bouton selon la revendication 2, caractérisé en ce que la partie d'obturation (23) comprend une facette inférieure ménagée en extrémité de la face inférieure de l'organe de commande, la facette (23) étant bordée de deux flasques latéraux (24, 25) perpendiculaires à l'axe de rotation (20) et d'une paroi de liaison (26) reliant les flasques latéraux, les flasques latéraux et la paroi de liaison étant extérieurs au conduit de sortie de vapeur (12), de sorte que les flasques et la paroi de liaison définissent un canal d'échappement de vapeur prolongeant le conduit (12) et orientant le jet de vapeur à l'écart de la surface supérieure (21) du levier basculeur (19).

4 - Bouton selon la revendication 3, caractérisé en ce que le bord inférieur (27) de la paroi de liaison (26) est en appui contre la face externe correspondante (28) du conduit lorsque le levier basculeur (19) est en position d'ouverture.

5 - Bouton selon la revendication 4, caractérisé en ce que les flasques latéraux (24, 25) restent à proximité des faces externes correspondantes du conduit d'échappement de vapeur (12).

6 - Bouton selon la revendication 5, caractérisé en ce que les flasques latéraux (24, 25) coulissent dans deux fentes (29, 30) ménagées dans le corps de bouton (1).

7 - Bouton selon la revendication 4, caractérisé en ce que la paroi de liaison (26) est réalisée en une matière et selon une épaisseur telles qu'elle présente une possibilité de déformation élastique et que son bord inférieur (27) reste en appui élastique contre la paroi correspondante (28) du conduit d'échappement de vapeur lorsque l'organe de commande (19) est en position d'ouverture et pendant une partie au moins de sa rotation autour de son axe (20).

8 - Bouton selon la revendication 7, caractérisé en ce que, en position d'ouverture du levier basculeur (19), le bord inférieur (27) de la paroi de liaison (26) est en contact sur la paroi correspondante (28) du conduit en une zone située au-dessus du plan horizontal contenant l'axe de rotation, de sorte que la paroi de liaison (26) participe au maintien du levier basculeur en position d'ouverture.

9 - Bouton selon l'une quelconque des revendications 1 à 8, caractérisé en ce que le levier basculeur (19) comprend en outre au moins une languette latérale de positionnement (31), perpendiculaire à l'axe de rotation (20), et venant porter en appui élastique glissant sur une partie crantée du corps de bouton (1) comprenant au moins un cran (36) de positionnement en position d'obturation et un cran (37) de positionnement en position d'ouverture.

10 - Bouton selon l'une quelconque des revendications 1 à 9, caractérisé en ce que le levier basculeur (19) comprend des fourches (38, 39) formant paliers et s'encliquetant sur un arbre (20) solidaire du corps de bouton (1).

11 - Couvercle de récipient culinaire, caractérisé en ce qu'il comprend un bouton selon l'une quelconque des revendications 1 à 10.

Fig.1

EP 0 341 162 A1

Fig.3

Fig.2

Fig.4

Fig. 5

Fig. 6

Fig.7

Fig. 8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 625 887 (M. ITO) <br> * Résumé; colonne 4, lignes 3-12; figures * <br> --- | 1-2,11 | A 47 J 36/06 <br> A 47 J 45/06 |
| A | FR-A-2 573 643 (SEB S.A.) <br> * Revendication 1; figures * <br> --- | 1-2,11 | |
| A | US-A-4 418 637 (T.W. HEERMANS) <br> * Colonne 3, ligne 63 - colonne 4, ligne 17; figures * <br> --- | 1-2,11 | |
| A,D | US-A-4 285 441 (S.A. ZISKIND) <br> * Figures * <br> ----- | 1-2,11 | |

DOMAINES TECHNIQUES
RECHERCHES (Int. Cl.4)

A 47 J

Le présent rapport a été établi pour toutes les revendications

| Lieu de la recherche | Date d'achèvement de la recherche | Examinateur |
|---|---|---|
| LA HAYE | 12-07-1989 | GAIC P.M.Z. |

EPO FORM 1503 03.82 (P0402)